# EUROPÄISCHE PATENTSCHRIFT

(11) **EP 4 367 511 B1**
(45) Veröffentlichungstag und Bekanntmachung des Hinweises auf die Patenterteilung: **18.12.2024**
(21) Anmeldenummer: 22740397.9
(22) Anmeldetag: 06.07.2022
(51) Int. Cl.: G01N 29/32, G01N 29/44, G01N 29/14, G01N 29/22

(54) **ANALYSEVORRICHTUNG UND VERFAHREN ZUR BESTIMMUNG EINES SCHWINGUNGSMUSTERS EINER SUBSTANZ**
ANALYSIS DEVICE AND METHOD FOR DETERMINING AN OSCILLATION PATTERN OF A SUBSTANCE
DISPOSITIF ET PROCÉDÉ D'ANALYSE POUR DÉTERMINATION D'UN MODÈLE D'OSCILLATION D'UNE SUBSTANCE

(30) Priorität: 07.07.2021 DE 102021117510
(43) Veröffentlichungstag der Anmeldung: 15.05.2024
(73) Patentinhaber: FR-FUTURE1 FRANZISKA MICHL UND RAIMUND HOFFMANN GBR, 95615 Marktredwitz (DE)
(72) Erfinder: HOFFMANN, Raimund, 95632 Wunsiedel (DE)
(74) Vertreter: Hofstetter, Schurack & Partner
(86) Internationale Anmeldenummer: PCT/EP2022/068694
(87) Internationale Veröffentlichungsnummer: WO 2023/280901

(56) Entgegenhaltungen:
- EP-A1- 0 685 728
- DE-T2- 69 431 873
- POLZAT O ET AL: "DETERMINATION OF NITROGEN DIOXIDE BY VISIBLE PHOTOACOUSTIC SPECTROSCOPY", ANALYTICAL CHEMISTRY, AMERICAN CHEMICAL SOCIETY, US, vol. 54, no. 9, 1 August 1982 (1982-08-01), pages 1485 - 1489, XP002406407, ISSN: 0003-2700, DOI: 10.1021/AC00246A009

## Beschreibung

Die Erfindung betrifft eine Analysevorrichtung zur Bestimmung eines Schwingungsmusters einer Substanz und ein Verfahren zum Bestimmen eines solchen Schwingungsmusters.

Die Bestimmung von Schwingungsmustern, das heißt beispielsweise Frequenzen oder Frequenzspektren, die von Objekten beziehungsweise Substanzen ausgehen, ist in der Physik bekannt. So können beispielsweise Schwingungsmuster von Oszillatoren, insbesondere elektromagnetische Wellen oder akustische Wellen, und Strahlungsspektren von angeregten Objekten und/oder Planeten gemessen werden, um Rückschlüsse auf die Strahlungsquelle zu ziehen. Aufnehmbare Schwingungsmuster können beispielsweise elektrische Wellen, magnetische Wellen, elektromagnetische Wellen, mechanische Wellen, akustische Wellen, Gravitationswellen und Materiewellen sein.

Das Problem bei der Bestimmung dieser Schwingungsmuster ist oft, dass eine Intensität der Abstrahlung von einer Substanz oder einem Objekt so gering ist, dass diese im Hintergrundrauschen der Messtechnik untergehen kann.

Aus der DE 694 31 873 T2 ist ein photoakustisches Analysegerät zur Analyse von Fluiden und gasförmigen Fluiden bekannt, wobei das Prinzip von photoakustischen Geräten auf einer Wechselwirkung mit Licht basiert. Das photoakustische Analysegerät weist eine Referenzkammer und eine Messkammer auf, wobei die Referenzkammer und die Messkammer je einen Detektor für Töne aufweist, die vom pulsierenden Lichtstrahl in der mindestens einen Referenzkammer und der mindestens einen Messkammer erzeugt worden sind. Der pulsierende Lichtstrahl passiert dabei zuerst die mindestens eine Referenzkammer und erst danach die mindestens eine Messkammer. Mittels diesem Prinzip kann zum Beispiel eine Gaskonzentration gemessen werden, es eignet sich jedoch nicht die Schwingungsmuster von Substanzen zu bestimmen, da nicht die Schwingung von der Substanz selber, sondern von einer Anregungsschwingung gemessen wird, die durch thermisches Ausbreiten und abkühlen der bestrahlten Probe stammt.

Aus der JP H06 - 90 181 B2 ist ein photoakustisches Messinstrument mit offenen Messzellen bekannt. Auch bei diesem Messinstrument sind eine Messkammer und eine Referenzkammer vorgesehen, die an zumindest einer Seite offen sind, um diese auf einer Probe anzuordnen. Die Probeoberfläche an der Messkammer wird mit einer Lichtquelle, insbesondere einer Xenon-Lampe oder einem Laser, bestrahlt, um den photoakustischen Effekt mit Mikrofonen zu messen. Wie auch schon bei dem zuvor genannten Analysegerät wird hierbei jedoch die Anregungsschwingung gemessen und nicht das gewollte Schwingungsmuster der Substanz. Daher eignen sich beide Vorrichtungen nicht dazu, die oben genannten Probleme zu lösen.

Aus der Veröffentlichung von Polzat O. und Atkinson G. H. ("Determination of Nitrogen Dioxide by Visible Photoacoustic Spectroscopy" Analytical Chemistry, American Chemical Society, Bd. 54, Nr. 9, 1. August 1982, Seiten 1485-1489, DOI: 10.1021/AC00246A009) ist eine photoakustische Spektroskopie bekannt, die mit einem Dauerstrich-Kryptonlaser zur quantitativen Detektion von NO₂ in Luftproben durchgeführt wird.

Die Aufgabe der vorliegenden Erfindung ist es, eine Analysevorrichtung und ein Verfahren zur Bestimmung eines Schwingungsmusters einer Substanz bereitzustellen, die das oben genannte Problem minimieren.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart.

Durch die Erfindung ist eine Analysevorrichtung zum Bestimmen eines Schwingungsmusters einer Substanz gemäß Anspruch 1 bereitgestellt.

Die Analysevorrichtung weist zumindest eine Zentraleinheit auf, die zwei identische Probenbehälter, zwei Mikrofoneinrichtungen und einen Differenzverstärker umfasst. Die Zentraleinheit kann also eine Messanordnung aufweisen, die zur Bestimmung des Schwingungsmusters mindestens erforderlich ist. Mit den zwei identischen Probenbehältern ist gemeint, dass diese wesensgleich aufgebaut sind und insbesondere eine gleiche Geometrie beziehungsweise Form aufweisen und aus dem gleichen Material ausgebildet sind. So können als Probenbehälter beispielsweise zwei Messingröhren bereitgestellt sein, die die gleiche Größe und den gleichen Umfang aufweisen und die vorzugsweise durch einen Deckel verschließbar sind. In dem jeweiligen Probenbehälter ist eine der beiden Mikrofoneinrichtungen angeordnet, wobei diese vorzugsweise in beiden Probenbehältern an der gleichen Position angeordnet sind. Beispielsweise können die Mikrofoneinrichtungen beide am Boden der jeweiligen Probenbehälter angeordnet sein. Die Mikrofoneinrichtungen können zumindest ein Mikrofon aufweisen, das ein Schwingungsmuster bestimmen kann. Das heißt, die Mikrofoneinrichtungen weisen einen Schwallwandler auf, der insbesondere eine akustische Welle, aber auch eine kapazitive oder induktive Welle messen kann.

Aus den jeweiligen Probenbehältern kann eine Verbindungsstrecke der jeweiligen Mikrofoneinrichtungen zu dem Differenzverstärker herausgeführt sein, wobei die Verbindungsstrecken jeweils identisch aufgebaut sind. Damit ist gemeint, dass die Verbindungsstrecken vorzugsweise gleich lang sind und aus einem gleichen Material ausgebildet sind. Insbesondere kann die jeweilige Verbindungsstrecke weitere Verstärker für das gemessene Signal aufweisen, wobei diese in jeder Verbindungsstrecke gleich aufgebaut und mit den gleichen Parametern angesteuert werden.

Der Differenzverstärker beziehungsweise Subtrahierer ist eine Operationsverstärkerschaltung, der zumindest zwei Eingänge aufweist und die Differenz zwischen den Eingangssignalen der beiden Eingänge bildet. Das heißt, der Differenzverstärker subtrahiert das Signal der einen Mikrofoneinrichtung von dem Signal der anderen Mikrofoneinrichtung. Somit können phasengleiche Störschwingungen aus beiden Probenbehältern kompensiert werden, womit ein Rauschen minimiert werden kann. Vorzugsweise kann der Differenzverstärker vor Einbringen der Substanz auf einen Nullpunkt eingeregelt werden. Bei Einbringen der Substanz in einen der beiden Probenbehälter kann dann der Differenzverstärker das Schwingungsmuster der Substanz bestimmen. Das heißt, dass das gemessene Signal an dem Differenzverstärker, das nach Einbringen der Substanz vorhanden ist, der Substanz zugeordnet werden kann. Unter einer Substanz kann dabei jedes flüssige, feste oder gasförmige Element beziehungsweise Objekt verstanden werden.

Die jeweiligen identischen Probenbehälter sind durch opake Verschlussdeckel verschließbar, wobei nach Verschließen das Innere der Probenbehälter durch Wände der Probenbehälter und den Verschlussdeckeln von allen Seiten vor optischer Strahlung abgeschirmt ist. Mit anderen Worten ist das Innere der Probenbehälter, das heißt die Messkammern, in die die Substanz eingebracht werden kann, nach Verschließen durch die Verschlussdeckel lichtdicht verschlossen. Dabei können die jeweiligen Probenbehälter aus einem opaken Material gefertigt sein, beispielsweise aus Kunststoff oder einem Metall, so dass das Innere der Probenbehälter bis auf eine Öffnung zum Einbringen der Substanz durch die Wände der Probenbehälter nach außen verschlossen ist, insbesondere lichtdicht. Nach Einbringen der Substanz durch die Öffnung in vorzugsweise nur einen der beiden identischen Probenbehälter können die jeweiligen Öffnungen durch die opaken Verschlussdeckel komplett nach außen verschlossen werden, so dass das Innere der Probenbehälter, insbesondere die Substanz, im Wesentlichen vor äußeren Einflüssen abgeschirmt ist, insbesondere vor Licht. Folglich ist die Substanz in einen der beiden identischen Probenbehältern lichtdicht verschlossen und der andere der beiden Probenbehälter bleibt als Referenz leer und ist auch lichtdicht verschlossen.

Des Weiteren ist die Analysevorrichtung dazu ausgebildet, das Schwingungsmuster der Substanz ohne die Verwendung einer Anregungsquelle für die Substanz zu bestimmen. Das bedeutet, dass die Analysevorrichtung keine Anregungsquelle aufweist, mit der die Probenbehälter und/oder die Substanz in einen der beiden Probenbehälter angeregt werden könnte. Insbesondere weist die Analysevorrichtung als Anregungsquelle keine Lichtquelle, insbesondere keinen Laser, keine Lautsprecher zur akustischen Anregung, keine Wärmequelle und/oder keine Strahlungsquelle auf. Mit der Analysevorrichtung soll folglich nur die Substanz im Normalzustand, das heißt bei Raumtemperatur und vorzugsweise unter Ausschluss von weiteren externen Einflüssen, gemessen werden.

Durch die Erfindung ergibt sich der Vorteil, dass auch Schwingungsmuster von niedriger Intensität verbessert bestimmt werden können, da Störsignale während der Messung kompensiert werden können. Durch die identische Ausgestaltung der Probenbehälter und der Verbindungsstrecken kann ein Einfluss von diesen auf die Messungen ausgeglichen werden.

Des Weiteren ist vorgesehen, dass die beiden Probenbehälter durch schwingungsdämpfende Elemente gelagert sind. Bei der Bestimmung des Schwingungsmusters können viele Störfaktoren die Messung beeinflussen. So kann beispielsweise eine Vibration in der Umgebung der Analysevorrichtung das Messsignal verfälschen. Beispielsweise kann ein Trittschall ungewollte Schwingungen erzeugen. Um diesen Effekt zu minimieren, können die Probenbehälter durch schwingungsdämpfende Elemente gelagert sein. Ein schwingungsdämpfendes Element kann beispielsweise ein elastisches Element, wie zum Beispiel ein Gummi oder eine Feder sein. Das schwingungsdämpfende Element ist vorzugsweise dazu ausgebildet, die Schwingungen aufzunehmen und zu reduzieren beziehungsweise zu kompensieren. So können die Probenbehälter beispielsweise auf Gummifüßen angeordnet sein. Hierdurch ergibt sich der Vorteil, dass Störeinflüsse weiter minimiert werden können.

Zusätzlich ist vorgesehen, dass die Zentraleinheit als Faraday'scher Käfig ausgebildet ist. Mit anderen Worten kann um die Probenbehälter, die Mikrofoneinrichtungen und den Differenzverstärker ein Faraday'scher Käfig angeordnet sein, der als elektrische Abschirmung wirkt und elektromagnetische Felder von außerhalb fernhält. Der Faraday'sche Käfig kann beispielsweise durch ein Gehäuse der Zentraleinheit erreicht werden, das als leitfähiges Gitter oder geschlossene Struktur bereitgestellt ist. Insbesondere kann die Zentraleinheit als ein Aluminium-Gehäuse um die oben genannten Komponenten ausgebildet sein. Hierdurch ergibt sich der Vorteil, dass elektronische Störeinflüsse von außerhalb der Zentraleinheit abgeschirmt werden können, womit sich die Messung des Spektralmusters verbessert.

Außerdem ist vorgesehen, dass die Analysevorrichtung ein schalldämmendes Gehäuse aufweist, wobei die Zentraleinheit in dem schalldämmenden Gehäuse angeordnet ist. Das schalldämmende Gehäuse kann dazu ausgebildet sein, eine Ausbreitung von Luft oder Körperschall zu minimieren, indem der Schall gedämpft oder absorbiert wird. Dies kann beispielsweise durch poröse oder elastische Absorptionsmaterialien und durch Resonatoren, beispielsweise Helmholtz-Resonatoren, erreicht werden. Vorzugsweise kann die Schalldämmung mittels eines Akustikschaumstoffs beziehungsweise Pyramidenschaumstoffs erreicht werden, der besonders günstig und effektiv Schallwellen von der Zentraleinheit abhalten kann. Hierdurch ergibt sich der Vorteil, dass Störsignale bei der Bestimmung des Schwingungsmusters weiter minimiert werden können.

Die Erfindung umfasst auch Ausgestaltungsformen, durch die sich zusätzliche Vorteile ergeben.

Eine Ausgestaltungsform sieht vor, dass die Analysevorrichtung eine Rechnervorrichtung mit einer Speichereinheit aufweist, wobei die Rechnervorrichtung dazu ausgebildet ist, das Schwingungsmuster der Substanz digital in der Speichereinheit zu speichern.

Vorzugsweise kann das Schwingungsmuster in Form einer Audiodatei digital in der Speichereinheit gespeichert werden. Die Rechnervorrichtung kann beispielsweise ein Computer oder eine Rechnerwolke (Cloud) sein, und die Speichereinheit kann einen nicht-flüchtigen Speicher aufweisen. Beispielsweise kann die Speichereinheit eine Festplatte oder ein Flash-Speicher sein. Zur Abnahme des Messsignals aus der Zentraleinheit kann die Zentraleinheit eine Cinch-Buchse aufweisen, an der ein schallisoliertes und abgeschirmtes Kabel zu der Rechnervorrichtung herausgeführt ist. Durch diese Ausgestaltungsform ergibt sich der Vorteil, dass die gemessenen Schwingungsmuster der Substanzen digital vorliegen und weiter verarbeitet werden können.

In vorteilhafter Weise ist vorgesehen, dass die Mikrofoneinrichtungen ein Kondensatormikrofon aufweisen. Insbesondere kann als Kondensatormikrofon ein extrem rauscharmes Kondensatormikrofon mit hoher Linearität und integrierten Feldeffekttransistorvorverstärkern verwendet werden. Die Verwendung eines Kondensatormikrofons bietet den Vorteil, dass ein sehr rauscharmer elektroakustischer Wandler mit hoher Linearität bereitgestellt werden kann.

In einer weiteren vorteilhaften Ausgestaltung ist vorgesehen, dass die Mikrofoneinrichtungen eine akustische Linse aufweisen, Das heißt, dass in jedem Probenbehälter das Messsignal des Schwingungsmusters durch eine akustische Linse verstärkt werden kann. Eine akustische Linse kann ein akustischer Kristall sein, der verschiedene Brechungsindizes für Schallwellen aufweist. Somit können bestimmte Störfrequenzen herausgefiltert und das eigentliche Signal verstärkt werden. Vorzugsweise können die Mikrofone der Mikrofoneinrichtungen am Boden der Probenbehälter angeordnet und von der akustischen Linse abgedeckt sein. Somit kann eine Verbesserung bei der Bestimmung des Schwingungsmusters der Substanz erreicht werden.

Vorzugsweise ist vorgesehen, dass der Differenzverstärker durch eine Abschirmkammer von den Probenbehältern und den Mikrofoneinrichtungen elektromagnetisch abgeschirmt ist, wobei die Abschirmkammer als Faraday'scher Käfig ausgebildet ist. Mit anderen Worten ist der Differenzverstärker innerhalb der Zentraleinheit nochmals vor den Probenbehältern beziehungsweise Messkammern elektromagnetisch abgeschirmt. Dies kann beispielsweise auch mittels eines Faraday'schen Käfigs erreicht werden, der innerhalb der Zentraleinheit den Differenzverstärker abschirmt. Vorzugsweise befindet sich auch ein Netzteil, das den Differenzverstärker und die Mikrofoneinrichtungen mit Strom versorgt, außerhalb der Zentraleinheit, um das Einstreuen von Magnetfeldern zu minimieren. Durch die Anordnung des Differenzverstärkers in der Abschirmkammer und/oder durch die Verwendung eines externen Netzteils ergibt sich der Vorteil, dass Störeinflüsse auf die Probenbehälter und somit auf die Bestimmung des Schwingungsmusters minimiert werden können.

Besonders bevorzugt ist vorgesehen, dass das schalldämmende Gehäuse durch schwingungsdämpfende Gehäuseelemente gelagert ist. Mit anderen Worten kann auch das schalldämmende Gehäuse, in welchem die Zentraleinheit angeordnet ist, zusätzlich durch Gehäuseelemente gelagert sein, die schwingungsdämpfend wirken. So können Schwingungsträger an dem Gehäuse angebracht sein, die mechanische Schwingungen aufnehmen und beispielsweise in eine andere Energieform, insbesondere Wärmeenergie, umwandeln können. Durch diese Ausgestaltungsform ergibt sich der Vorteil, dass Störeffekte weiter minimiert werden können.

In einer weiteren Ausgestaltungsform ist vorgesehen, dass die Analysevorrichtung eine Schwingungsmessvorrichtung aufweist, die dazu ausgebildet ist, einen Einfluss von äußeren Schwingungen als Schwingungssignal zu bestimmen und ein Schwingungswarnsignal bereitzustellen, falls das Schwingungssignal über einem vorgegebenen Schwingungsschwellenwert ist. Mit anderen Worten kann die Schwingungsmessvorrichtung einen Einfluss von äußeren Schwingungen, beispielsweise durch Trittschall, messen und überprüfen, ob dieses gemessene Schwingungssignal über einem vorgegebenen Schwingungsschwellenwert liegt. Ist dies der Fall, kann ein Schwingungswarnsignal bereitgestellt werden. Das Schwingungswarnsignal kann eine Störung der Messung anzeigen, so dass ein Benutzer weiß, dass die Messung wiederholt werden muss. Das Schwingungswarnsignal kann beispielsweise in Form einer Anzeige, beispielsweise einer Lampe, bereitgestellt werden. Alternativ oder zusätzlich kann das Schwingungswarnsignal auch als Steuersignal bereitgestellt sein, durch das die Messergebnisse automatisch verworfen und die Messung erneut gestartet werden kann. Der Schwingungsschwellenwert kann vorzugsweise sehr sensitiv gewählt werden, um einen Einfluss von äußeren Schwingungen, insbesondere Trittschall, auf die Messung gering zu halten.

In einer weiteren vorteilhaften Ausgestaltungsform ist vorgesehen, dass die Analysevorrichtung eine Spektrumanalysatorvorrichtung aufweist, die dazu ausgebildet ist, ein elektromagnetisches Störsignal zu bestimmen und ein Störwarnsignal bereitzustellen, falls das elektromagnetische Störsignal über einen vorgegebenen Störsignalschwellenwert ist. Mit anderen Worten kann die Spektrumanalysatorvorrichtung einen Spektrumanalysator und/oder ein Oszilloskop aufweisen, der elektromagnetische Schwingungen in der Umgebung als Störsignal bestimmen kann. So können beispielsweise bei vielen in der Umgebung befindlichen Geräten elektromagnetische Schwingungen entstehen, ein sogenannter Elektrosmog, oder es können elektromagnetische Störfelder durch geopathische Störzonen in der Umgebung vorhanden sein. Sind diese elektromagnetischen Störungen in der Umgebung zu groß, kann das gemessene Störsignal über einem vorgegebenen Störsignalschwellenwert liegen, wodurch die Spektrumanalysatorvorrichtung ein Störwarnsignal bereitstellen kann. Das Störwarnsignal kann beispielsweise über eine Anzeige, insbesondere eine Lampe, angezeigt werden oder als Steuersignal bereitgestellt sein, durch das die Messung abgebrochen wird. Durch diese Ausgestaltungsform ergibt sich der Vorteil, dass elektromagnetische Einflüsse aus der Umgebung detektiert werden können und somit ausgeschlossen werden kann, dass das gemessene Schwingungsmuster von elektromagnetischen Umwelteinflüssen beeinflusst wurde.

Ein weiterer Aspekt der Erfindung betrifft ein Verfahren im Einklang mit Anspruch 9 zum Bestimmen eines Schwingungsmusters einer Substanz mit einer Analysevorrichtung nach einer der vorhergehenden Ausgestaltungsformen. Als Schritte umfasst das Verfahren ein Anordnen einer Substanz in einer der beiden Probenbehälter, ein Verschließen der Probenbehälter und/oder der Zentraleinheit, und ein Messen des Schwingungsmusters an dem Differenzverstärker für eine vorgegebene Messdauer. Mit anderen Worten wird zunächst die Substanz in einem der beiden Probenbehälter angeordnet, wobei der andere Probenbehälter leer bleibt. Anschließend können die beiden Probenbehälter verschlossen werden, beispielsweise mit Verschlussdeckeln und/oder die Zentraleinheit, die vorzugsweise als Faraday'scher Käfig ausgebildet ist, wird verschlossen. Dann kann die Messung gestartet werden, indem am Differenzverstärker ein Signal der Substanz gemessen wird, die das Schwingungsmuster darstellt, wobei die Messung vorzugsweise eine vorgegebene Messdauer aufweisen kann. Beispielsweise kann eine minimale Messdauer festgelegt sein, insbesondere 25 s. Zur Handhabung der Substanz und zum Einbringen der zu digitalisierenden Probe (Substanz) werden vorzugsweise Schutzvorrichtungen, wie Handschuhe, Pinzetten und/oder Filtermasken verwendet, um eine Kontamination der Probenbehälter zu vermeiden. So können vorzugsweise weiße Zwirnhandschuhe getragen werden und als Greifwerkzeuge geeignete Pinzetten benutzt werden. Durch das Verfahren ergeben sich gleiche Vorteile und Variationsmöglichkeiten wie bei der Analysevorrichtung.

Vorzugsweise ist bei dem Verfahren vorgesehen, dass vor dem Anordnen der Substanz in einem der Probenbehälter ein Signal des Differenzverstärkers kompensiert wird. Das heißt, dass bevor mit der Messung begonnen wird, die Probenbehälter und/oder die Zentraleinheit verschlossen werden können, ohne dass sich eine Substanz in einem der Probenbehälter befindet. Der Differenzverstärker kann dann auf einen Nullpunkt eingeregelt werden, bevor das oben beschriebene Verfahren durchgeführt wird. Somit kann sichergestellt werden, dass phasengleiche Störschwingungen aus beiden Probenbehältern kompensiert werden.

Besonders bevorzugt ist vorgesehen, dass ein Schutzbehältnis, insbesondere ein Glasröhrchen, mit der Substanz in dem Probenbehälter angeordnet wird, und ein weiteres identisches Schutzbehältnis ohne die Substanz in dem anderen Probenbehälter angeordnet wird. Durch das Schutzbehältnis kann vermieden werden, dass die Substanz nach der Messung in dem Probenbehälter verbleibt und diesen möglicherweise kontaminiert. Auch kann mittels eines Schutzbehältnisses beispielsweise eine flüssige Substanz vereinfacht in den Probenbehälter eingebracht werden. Damit nicht das Schutzbehältnis, das insbesondere ein Glasröhrchen sein kann, die Messung verfälscht, wird ein identisches Schutzbehältnis ohne die Substanz in den anderen Probenbehälter eingebracht. Mit dem identischen Schutzbehältnis ist hier wieder ein Schutzbehältnis gleicher Bauart, gleicher Form und gleichen Materialien gemeint. Hierdurch ergibt sich der Vorteil, dass eine Symmetrie bei der Messung des Schwingungsmusters nicht gestört wird.

In einer weiteren Ausgestaltungsform des Verfahrens ist vorgesehen, dass vor dem Messen des Schwingungsmusters die Zentraleinheit in einem schalldämmenden Gehäuse angeordnet wird. Somit können insbesondere akustische Störeinflüsse von außerhalb bei der Messung des Schwingungsmusters minimiert werden.

Vorzugsweise können auch vor oder während der Messung des Schwingungsmusters Umwelteinflüsse der Umgebung auf Vorliegen eines Schwingungssignals und/oder eines elektromagnetischen Störsignals überwacht werden, wobei die Messung verworfen beziehungsweise abgebrochen und neu gestartet werden kann, falls ein solches Signal vorliegt. Hierzu kann vorzugsweise eine Schwingungsmessvorrichtung und/oder eine Spektrumanalysatorvorrichtung verwendet werden, die ihr jeweiliges Messsignal überwachen und auf Überschreiten eines vorgegebenen Schwellenwerts prüfen. Somit können in vorteilhafterweise Störeinflüsse aus der Umwelt im Vorfeld erkannt und ausgeschlossen werden.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: eine schematische Darstellung einer Analysevorrichtung gemäß einer beispielhaften Ausführungsform;
- Fig. 2: eine perspektivische Darstellung einer Analysevorrichtung gemäß einer beispielhaften Ausführungsform;
- Fig. 3: eine perspektivische Darstellung einer Analysevorrichtung gemäß einer weiteren beispielhaften Ausführungsform;
- Fig. 4: ein schematisches Verfahrensdiagramm gemäß einer beispielhaften Ausführungsform.

In den Figuren sind gleiche oder funktionsgleiche Elemente mit den gleichen Bezugszeichen versehen.

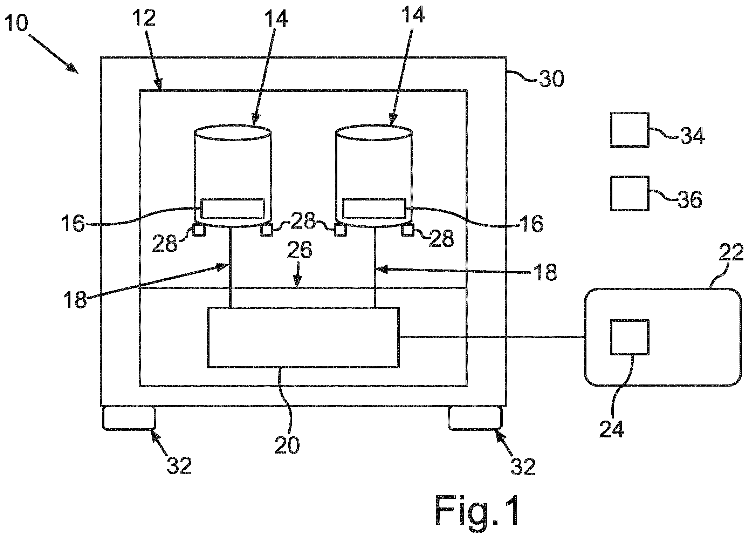

In Fig. 1 ist eine Analysevorrichtung 10 zur Bestimmung eines Schwingungsmusters einer Substanz gemäß einer beispielhaften Ausführungsform dargestellt. Die Analysevorrichtung 10 kann eine Zentraleinheit 12 aufweisen, wobei die Zentraleinheit 12 zwei Probenbehälter 14 umfasst, die identisch ausgebildet sind. Mit identisch ist hierbei gemeint, dass diese die gleiche Form aufweisen und aus dem gleichen Material gefertigt sind. Die Probenbehälter 14, die auch als mechanische Aufnehmer bezeichnet werden können, können insbesondere zwei Messingröhren sein, die vorzugsweise mit einem Deckel (in dieser Figur nicht gezeigt) verschließbar sind.

In den jeweiligen Probenbehältern 14 kann jeweils eine Mikrofoneinrichtung 16 angeordnet sein, die vorzugsweise im Boden der Probenbehälter 14 angeordnet sind. Beispielsweise kann ein Mikrofon der Mikrofoneinrichtungen 16 in einer Gummihalterung im Boden der Probenbehälter 14 in einer vorgegebenen Position gehalten werden. Als Mikrofon beziehungsweise Wandlerelement der Mikrofoneinrichtungen 16 können vorzugsweise extrem rauscharme Kondensatormikrofone mit hoher Linearität und integrierten Feldeffekttransistorvorverstärkern verwendet werden, die einen Frequenzbereich zwischen 20 Hz bis 20 kHz und einen Verstärkungsfaktor von 3 dB aufweisen. Die beiden Kondensatormikrofone befinden sich im Boden der Probenbehälter 14 unterhalb einer jeweiligen akustischen Linse (in dieser Figur nicht gezeigt), wobei die akustische Linse das Signal in dem gewünschten Frequenzbereich filtert und verstärkt. Die Mikrofoneinrichtungen weisen vorzugsweise gleichartige Mikrofonverstärker (Eingangsverstärker) mit einer Verstärkung von jeweils 40 dB und einer Anstiegssteilheit von 9 V/µs bei einem Eingangsrauschen von 5 nV/Hz² auf. Der Frequenzbereich und die Linearität der Eingangsverstärker sind vorzugsweise bei 230 Hz - 2 dB und bei 120 kHz (-3 dB). Hierbei dient eine Begrenzung im unteren Frequenzbereich einer Trittschallunterdrückung. Die oben genannten Angaben sind für beide Mikrofoneinrichtungen 16 identisch, so dass gleiche Signale erzeugt werden.

Die Mikrofoneinrichtungen 16 sind über jeweilige Verbindungsstrecken 18 mit einem Differenzverstärker 20 elektronisch gekoppelt, wobei die Verbindungsstrecken 18 jeweils identisch aufgebaut sind. Der identische Aufbau der Verbindungsstrecken 18 bedeutet, dass eine gleiche Kabellänge und ein gleiches Material, insbesondere ein gleicher Dämpfungsfaktor, für die Verbindungsstrecken 18 vorliegt. Vorzugsweise sind die Kondensatormikrofone der Mikrofoneinrichtungen 16 ausgangsseitig mit den Eingängen des Differenzverstärkers 20 mit einer Verstärkung von 0 dB verbunden. Der Differenzverstärker 20 gestattet einen Abgleich der Eingangssignale auf null, wenn beide Eingangssignale gleich sind. Die elektrischen Grunddaten des Differenzverstärkers 20 können denen der Eingangsverstärker der Mikrofoneinrichtungen 16 entsprechen.

So können die Signale der Mikrofoneinrichtungen 16 in der Elektronik verstärkt und dann in dem Differenzverstärker 20 voneinander subtrahiert werden, so dass das Ergebnis von phasengleichen Signalen null ist. So können phasengleiche Störschwingungen aus beiden Probenbehältern 14 in dem Differenzverstärker 20 kompensiert werden.

Wird nun eine Substanz beziehungsweise eine Probe oder ein Objekt in einen der beiden Probenbehälter eingebracht, kann ein Signal der Substanz als Schwingungsmuster in dem Differenzverstärker 20 bestimmt werden. Das heißt, dass ein Signal, das in dem Differenzverstärker 20 nach dem Abgleich auf null gemessen wird, der Substanz zugeordnet werden kann. Die Substanz kann vorzugsweise in einem eigenen Schutzbehältnis, insbesondere einem Glasrohr, in dem Probenbehälter 14 positioniert werden. Das hat den Vorteil, dass eine Kontamination vermieden werden kann und auch flüssige Substanzen in dem Probenbehälter 14 angeordnet werden können.

Ein am Differenzverstärker 20 gemessenes Schwingungsmuster kann aus der Zentraleinheit an eine Rechnervorrichtung 22 weitergeleitet werden, wobei hierfür die Zentraleinheit beispielsweise eine Cinch-Buchse aufweist, über die ein Kabel zu der Rechnervorrichtung 22 geführt werden kann. Die Rechnervorrichtung 22 kann eine Speichereinheit 24 aufweisen, die insbesondere ein nicht-flüchtiger Speicher sein kann. Auf dieser Speichereinheit 24 kann dann das Schwingungsmuster der Substanz digital gespeichert werden. So kann vorzugsweise eine Datenbank mit mehreren Substanzen und deren jeweiligen Schwingungsmustern erzeugt werden.

Zur Vermeidung von Störeinflüssen kann die Zentraleinheit 12, in der sich die beiden Probenbehälter 14, die Mikrofoneinrichtungen 16 und der Differenzverstärker 20 befinden, als ein Faraday'scher Käfig ausgebildet sein. Insbesondere kann die Zentraleinheit 12 als Aluminiumgehäuse ausgebildet sein. Damit die Elektronik des Differenzverstärkers 20 die Messung in den Probenbehältern 14 nicht stört, kann der Differenzverstärker 20 in einer eigenen Abschirmkammer 26 angeordnet sein, die vorzugsweise auch als Faraday'scher Käfig ausgebildet ist und die beispielsweise mittels einer Aluminiumwand zwischen dem Differenzverstärker 20 und den Probenbehältern 14 bereitgestellt wird.

Zur Vermeidung von Einflüssen von außerhalb, insbesondere durch Schwingungen, die durch Erschütterungen in der Umgebung der Analysevorrichtung 10 auftreten können, sind die Probenbehälter 14 durch schwingungsdämpfende Elemente 28 gelagert, wobei die schwingungsdämpfenden Elemente 28 beispielsweise Gummifüße sein können.

Um zu vermeiden, dass von außen kommende Schallwellen die Messung beeinflussen, ist die Zentraleinheit 16 besonders bevorzugt in einem schalldämmenden Gehäuse 30 angeordnet, wobei das schalldämmende Gehäuse Resonatoren aufweisen kann, die einen Schall von außerhalb minimieren. Des Weiteren kann das schalldämmende Gehäuse 30 durch schwingungsdämpfende Gehäuseelemente 32 zusätzlich gegen einen Einfluss von Trittschall federnd gelagert sein. Auch die schwingungsdämpfenden Gehäuseelemente 32 können als Gummifüße ausgebildet sein.

Trotz aller Abschirmungen und akustischen Dämpfungen gegen Störungen von außen kann eine Digitalisierung des Schwingungsmusters der Substanz noch weiter verbessert werden, wenn Umweltstörungen so gering wie möglich gehalten werden. Insbesondere kann ein Einfluss von äußeren Schwingungen, beispielsweise durch Trittschall, während der Messung durch eine Schwingungsmessvorrichtung 34 überwacht werden. Dazu kann die Schwingungsmessvorrichtung 34 vorzugsweise mit dem schalldämmenden Gehäuse 30 verbunden sein. Die Schwingungsmessvorrichtung 34 kann ein Prüfgerät zur Pegelüberwachung sein, wobei dieses dazu ausgebildet sein kann, ein Schwingungssignal der Analysevorrichtung 10 und/oder der Umgebung zu bestimmen und zu prüfen, ob das gemessene Schwingungssignal über einem vorgegebenen Schwingungsschwellenwert liegt. Der Schwingungsschwellenwert kann eine vorher festgelegte Toleranz sein, die bei der Messung nicht überschritten oder unterschritten werden soll. Ist das gemessene Schwingungssignal über oder unter dem Schwingungsschwellenwert, kann die Schwingungsmessvorrichtung ein Schwingungswarnsignal bereitstellen. Das Schwingungswarnsignal kann beispielsweise eine Warnlampe sein, die bei Überschreiten oder Unterschreiten des Schwingungsschwellenwerts aufleuchtet und somit einem Benutzer anzeigen kann, dass das Schwingungssignal in der Umgebung während der Messung zu hoch oder zu niedrig war. So kann der Benutzer erkennen, dass die Messung wiederholt werden muss.

Eine weitere Verbesserung wird erreicht, wenn die Umgebung der Analysevorrichtung 10 während der Messung weitestgehend frei von elektromagnetischen Störsignalen ist, insbesondere frei von Elektrosmog und geopathischen Störzonen. Um ein elektromagnetisches Störsignal zu bestimmen, kann daher die Analysevorrichtung 10 eine Spektrumanalysatorvorrichtung 36 aufweisen, die dazu ausgebildet sein kann, das elektromagnetische Störsignal zu bestimmen und zu prüfen, ob das elektromagnetische Störsignal über einem vorgegebenen Störsignalschwellenwert liegt. Ist das elektromagnetische Störsignal über dem vorgegebenen Steigungsschwellenwert, kann die Spektrumanalysatorvorrichtung 36 dazu ausgebildet sein, ein Störwarnsignal bereitzustellen, das einem Benutzer angezeigt werden kann. Somit kann der Benutzer gewarnt werden, dass die Messung fehlerhaft sein könnte. Als Spektrumanalysatorvorrichtung 36 kann beispielsweise ein Spektrumanalysator (Spectrum Analyser) verwendet werden, der mit einer Antenne zur Überwachung von elektromagnetischen Störsignalen verbunden ist. Alternativ oder zusätzlich kann die Aufnahme in einem sogenannten Absorberraum stattfinden.

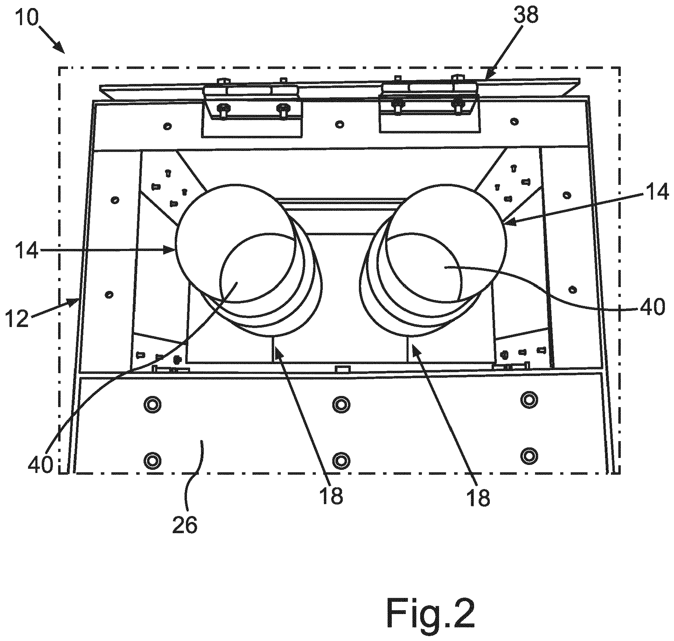

In Fig. 2 ist eine perspektivische Ansicht einer Analysevorrichtung 10 gemäß einer beispielhaften Ausführungsform dargestellt. In dieser Darstellung ist die Zentraleinheit 12 gezeigt, die als Aluminiumgehäuse ausgebildet ist und in der die beiden identischen Probenbehälter 14, die als Messingröhren ausgebildet sind, angeordnet sind. Die Zentraleinheit 12 kann vorzugsweise während einer Messung durch einen Deckel 38 verschlossen werden, so dass die Probenbehälter 14 rundum vor elektromagnetischen Einflüssen abgeschirmt sind.

Am Boden der Probenbehälter 14 kann jeweils eine akustische Linse 40 angeordnet sein, wobei unter der akustischen Linse 40 die Mikrofone der Mikrofoneinrichtung 16 angeordnet sind. Ein jeweilig gemessenes Signal der Mikrofoneinrichtungen 16 kann über eine jeweilige Verbindungsstrecke 18 in die Abschirmkammer 26 übertragen werden, wobei sich in der Abschirmkammer 26 der Differenzverstärker befindet. Das heißt, dass im vorderen Teil der Zentraleinheit 12, der als Abschirmkammer 26 ausgebildet ist, die elektronischen Komponenten untergebracht sein können. Besonders bevorzugt können die elektronischen Komponenten durch ein externes Netzteil (nicht gezeigt) versorgt werden, so dass fremde Magnetfelder aus Transformatoren nicht einstreuen.

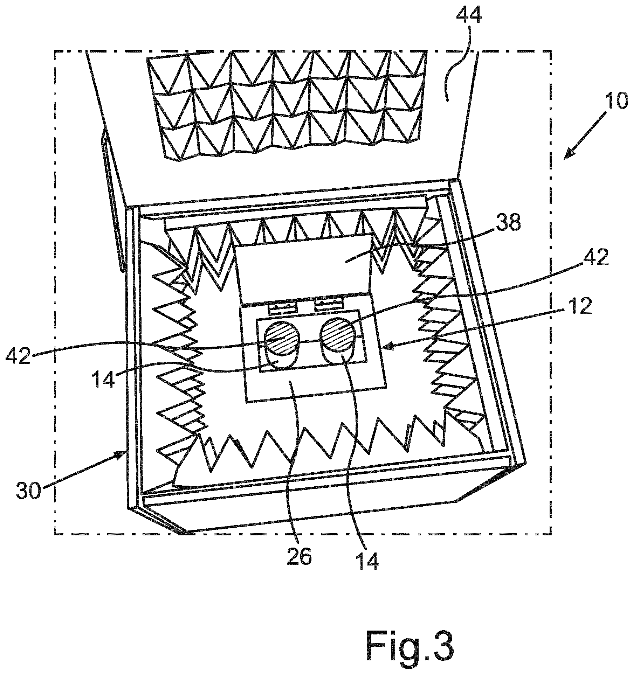

In Fig. 3 ist die Analysevorrichtung 10 perspektivisch in einer weiteren Ausführungsform dargestellt. In dieser Ausführungsform ist die Zentraleinheit 12 in dem schalldämmenden Gehäuse 30 angeordnet. Die Schalldämmung kann hierbei durch pyramidenförmige Schallabsorptionsplatten erzeugt werden, die in dem schalldämmenden Gehäuse 30 angeordnet sind.

Die in Fig. 3 gezeigte Anordnung der Zentraleinheit 12 in dem schalldämmenden Gehäuse 30 kann eine Situation kurz vor einer Messung mit der Analysevorrichtung 10 darstellen. Hierbei können die Probenbehälter 14 durch jeweilige Verschlussdeckel 42 verschlossen sein, wobei in einem der beiden Probenbehälter 14 die Substanz positioniert sein kann und wobei der andere Probenbehälter 14 leer ist oder ein leeres Schutzbehältnis aufweist. Vorzugsweise kann vor der Messung des Schwingungsmusters der Substanz noch der Deckel 38 der Zentraleinheit verschlossen werden und der Deckel 44 des schalldämmenden Gehäuses. Anschließend kann die Messung gestartet werden.

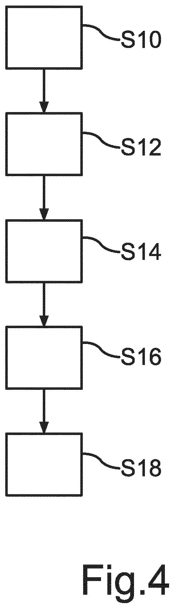

In Fig. 4 ist ein schematisches Verfahrensdiagramm zum Bestimmen eines Schwingungsmusters einer Substanz mit der Analysevorrichtung 10 gemäß einer beispielhaften Ausführungsform dargestellt. In einem Schritt S10 kann die Stromversorgung zur Analysevorrichtung 10 hergestellt werden, und die Zentraleinheit 12 kann beispielsweise an einem Mikrofoneingang der Rechnervorrichtung 22 angeschlossen werden. Dann kann vor dem Anordnen der Substanz in einem Probenbehälter 14 das Signal des Differenzverstärkers 20 kompensiert werden. Das bedeutet, das Signal des Differenzverstärkers 20 kann auf null eingeregelt werden, so dass sich phasengleiche Störschwingungen aus beiden Probenbehältern 14 ausgleichen.

In einem Schritt S12 kann dann die Substanz in einem der beiden Probenbehälter 14 angeordnet werden, wobei die Substanz vorzugsweise in einem Schutzbehältnis, insbesondere einem Glasrohr, in den Probenbehälter 14 eingebracht wird. Beim Einbringen der Substanz ist vorzugsweise darauf zu achten, dass ein Benutzer eine Schutzausrüstung trägt, um Kontaminationen durch den Benutzer zu vermeiden. So kann der Benutzer vorzugsweise Schutzhandschuhe, insbesondere weiße Zwirnhandschuhe, und eine Maske während der Positionierung der Substanz in dem Probenbehälter 14 tragen. Des Weiteren kann zur Positionierung der Substanz eine als Greifwerkzeug geeignete Pinzette benutzt werden. In dem anderen Probenbehälter 14, in dem die Substanz angeordnet wird, kann vorzugsweise das gleiche Schutzbehältnis ohne die Substanz angeordnet werden, um einen Einfluss des Schutzbehältnisses auf die Messung auszugleichen.

Anschließend kann in einem Schritt S14 der jeweilige Probenbehälter 14 mittels eines Verschlussdeckels 42 verschlossen werden. Zusätzlich kann auch der Deckel 38 der Zentraleinheit 12 geschlossen werden, so dass die Zentraleinheit 12 einen abgeschlossenen Faraday'schen Käfig darstellt.

In einem Schritt S16 kann die Zentraleinheit 12 in dem schalldämmenden Gehäuse 30 angeordnet werden, und der Gehäusedeckel 44 des schalldämmenden Gehäuses 30 kann verschlossen werden. Der Schritt S16 kann vorzugsweise vor der eigentlichen Messung durchgeführt werden, wobei das Anordnen der Zentraleinheit 12 in dem schalldämmenden Gehäuse 30 beispielsweise auch vor dem Schritt S10 stattfinden kann und nur das Schließen des Gehäusedeckels 44 in der dargestellten Reihenfolge durchgeführt wird.

Schließlich kann in einem Schritt S18 das Schwingungsmuster an dem Differenzverstärker 20 gemessen werden, wobei hierfür vorzugsweise eine Messdauer vorgegeben wird, die für alle Messungen gleich ist. So kann eine Aufnahmezeit beispielsweise zumindest 25 s betragen.

Das so digitalisierte Schwingungsmuster kann dann beispielsweise mittels einer Audiosoftware in der Rechnervorrichtung 22 auf der Speichereinheit 24 gespeichert werden, insbesondere als Wave-Datei, und entsprechend der Substanz benannt werden. Des Weiteren kann gegebenenfalls ein Text zu der Datei ergänzt werden. Die Digitalisierungsmessung kann vorzugsweise mit einer Einstellung von 48 kHz Stereo, bei 16 Bit und 187 kB/s oder einer höheren Auflösung vorgenommen werden.

Nach der Messung der Substanz kann das mit der Substanz versehene Schutzbehältnis entnommen und der Probenbehälter 14 mit der nächsten Probe bestückt werden. Hierbei wird vorzugsweise immer ein neues Schutzbehältnis verwendet.

Eine bevorzugte Anwendung der Analysevorrichtung 10 betrifft die Ermittlung einer Abstrahlung von biologischen Objekten, biologischen Substanzen oder homöopathischen Mitteln beziehungsweise deren therapeutisch genutzten Substanzen und Medikamenten. Dabei basiert die Idee auf der quantenphysikalischen Annahme, dass Energiezustände von Substanzen und Objekten als diskrete Oszillatoren vorliegen und alle Körper durch bestimmte Frequenzmuster repräsentiert sind, die diese als Feld in ihre Umgebung abstrahlen. Dabei ist es unerheblich, in welcher Form diese Schwingung vorliegt, beziehungsweise elektrisch, magnetisch, elektromagnetisch, mechanisch, akustisch, als Gravitationswellen, Zeitwellen etc., und wie sie sich deren jeweilige Ausprägungsform der Umgebung mitteilt. Das bisherige Problem bestand darin, dass es bisher nur unter bestimmten physikalisch definierten Bedingungen möglich ist, diese Abstrahlungen mit der zur Verfügung stehenden Messtechnik zu erfassen. So ist es zum Beispiel möglich, von einem glühenden Metallstück die Abstrahlung mit einem Spektrometer zu erfassen und diese als Energiefrequenzdiagramm sichtbar zu machen. Auch in der Astronomie werden aus den empfangenen Strahlungsspektren Rückschlüsse auf die Strahlungsquellen gezogen.

Da es bisher nach aktuellem Kenntnisstand nicht gelungen ist, die Abstrahlungen der Substanzen mit dafür üblichen Verfahren nachzuweisen und visualisierbar zu machen, war zu schlussfolgern, dass die zu messenden Signale (Schwingungsspektren) in ihrer Intensität zu gering sind und auch nicht in klassischer deterministischer Form vorliegen, so dass sie sich dem Nachweis mittels der üblichen, bekannten Messtechnik entziehen. So wurde angenommen, dass sie im Pegel des Hintergrundrauschens verborgen sind, nicht in klassischer deterministischer Form vorliegen und zusätzlich in üblichen Rauschpegel der jeweils benutzten Mess- und Analysetechnik untergehen. So ist es bei allen bisher bekannten Verfahren nicht gelungen, die Abstrahlung der zu digitalisierenden Substanz als Frequenzspektrum messtechnisch nachzuweisen und graphisch darzustellen. Das jeweils gewonnene elektrische Signal war dabei immer ein elektronisches Rauschen. Trotzdem erwiesen sich die meisten dieser Verfahren bei der Anwendung am Menschen als mehr oder weniger erfolgreich bei der Übertragung der Information, vergleichbar mit der Wirkung homöopathischer Mittel hoher Potenz. Die Frage, wo und wie die Information gespeichert und übertragen wird, bleibt dabei unbeantwortet.

Eigene theoretische Untersuchungen, Experimente und Entwicklungen lassen die Schlussfolgerung zu, dass die vorliegenden Signale sowohl als Modifikation des Rauschens in Erscheinung treten als auch in ihrer Intensität unterhalb des Rauschpegels liegen, das heißt im Pegel des Hintergrundrauschens vorborgen sind, nicht in klassischer deterministischer Form vorliegen und zusätzlich im üblichen Rauschpegel der jeweils benutzten Mess- und Analysetechnik untergehen.

Unter Berücksichtigung dieser Erkenntnis wurden in den durchgeführten Laborexperimenten als Wandlerelemente (Mikrofoneinrichtungen) spezielle Mikrofone verwendet, die sowohl induktive als auch kapazitive und zusätzliche akustische Komponenten erfassen. Die Überlegung, diese Art der Wandler zu verwenden, begründet sich auch damit, dass im Körper Informationen als Soliton-Schwingungen übertragen werden, wobei unter Soliton-Schwingungen Schwingungen im biologischen Bereich zu verstehen sind, die aus gemischten Komponenten von akustischen und elektromagnetischen Anteilen bestehen.

Als Verfahrensprinzip wurde vorliegend eine speziell für diesen Anwendungsbereich entwickelte Kompensationsmessung verwendet. Die Signale aus zwei völlig identischen Wandlerstrecken werden einem extrem rauscharmen Kompensationsverstärker zugeführt, so dass eine weitgehende Kompensation phasensynchroner Störschwingungen erreicht werden kann. Vor Einbringen der zu analysierenden Probe wird diese Kompensation gegen null eingeregelt. Nach Einbringen der Probe bleiben so nur die Signaländerungen zur weiteren Verarbeitung bestehen, die durch die Probe verursacht wurden und diese im Rauschsignal charakterisieren.

Insgesamt zeigen die Beispiele, wie durch die Erfindung Schwingungsmuster von Substanzen zur Bereitstellung von Simulationseinwirkungen unterschiedlicher Präparate bereitgestellt werden können.

## Patentansprüche

1. Analysevorrichtung (10) zur Bestimmung eines Schwingungsmusters einer Substanz, umfassend
- eine Zentraleinheit (12) mit zwei identischen Probenbehältern (14), zwei Mikrofoneinrichtungen (16), einem Differenzverstärker (20), opaken Verschlussdeckeln (42), Verbindungsstrecken (18) und schwingungsdämpfenden Elementen (28);
- wobei die Probenbehälter (14) durch die jeweiligen opaken Verschlussdeckel (42) verschließbar sind, wobei nach Verschließen das Innere der Probenbehälter (14) durch Wände der Probenbehälter und den Verschlussdeckeln (42) von allen Seiten vor optischer Strahlung abgeschirmt ist;
- wobei in den jeweiligen Probenbehältern (14) jeweils eine der Mikrofoneinrichtungen (16) angeordnet ist;
- wobei die Mikrofoneinrichtungen (16) mit dem Differenzverstärker (20) elektronisch über die jeweiligen Verbindungsstrecken (18) gekoppelt sind, wobei die Verbindungsstrecken (18) jeweils identisch aufgebaut sind;
- wobei der Differenzverstärker (20) dazu ausgebildet ist, phasengleiche Störschwingungen aus beiden Probenbehältern (14) zu kompensieren und bei Einbringen der Substanz in nur einen der beiden Probenbehälter (14) das Schwingungsmuster der Substanz zu bestimmen; und
- wobei die Analysevorrichtung (10) keine Anregungsquelle aufweist, mit der die Probenbehälter (14) und/oder die Substanz in einen der beiden Probenbehälter (14) anregbar sind;
- wobei die beiden Probenbehälter (14) durch die schwingungsdämpfenden Elemente (28) gelagert sind, die dazu ausgebildet sind, Schwingungen aufzunehmen und zu reduzieren
- wobei die Zentraleinheit (12) als Faraday'scher Käfig ausgebildet ist; und
- wobei die Analysevorrichtung (10) ein schalldämmendes Gehäuse (30) aufweist, wobei die Zentraleinheit (12) in dem schalldämmenden Gehäuse (30) angeordnet ist.

2. Analysevorrichtung (10) nach Anspruch 1, wobei die Analysevorrichtung (10) eine Rechnervorrichtung (22) mit einer Speichereinheit (24) aufweist, wobei die Rechnervorrichtung (22) dazu ausgebildet ist, das Schwingungsmuster der Substanz digital in der Speichereinheit (24) zu speichern.

3. Analysevorrichtung (10) nach einem der vorhergehenden Ansprüche, wobei die Mikrofoneinrichtungen (16) ein Kondensatormikrofon aufweisen.

4. Analysevorrichtung (10) nach einem der vorhergehenden Ansprüche, wobei die Mikrofoneinrichtungen (16) eine akustische Linse (40) aufweisen.

5. Analysevorrichtung (10) nach einem der vorhergehenden Ansprüche, wobei die Zentraleinheit (12) der Analysevorrichtung (10) eine Abschirmkammer (26) aufweist, wobei der Differenzverstärker (20) durch die Abschirmkammer (26) von den Probenbehältern (14) und den Mikrofoneinrichtungen (16) elektromagnetisch abgeschirmt ist, wobei die Abschirmkammer (26) als Faraday'scher Käfig ausgebildet ist.

6. Analysevorrichtung (10) nach einem der vorhergehenden Ansprüche, wobei die Analysevorrichtung (10) schwingungsdämpfende Gehäuseelemente (32) aufweist, wobei das schalldämmende Gehäuse (30) durch die schwingungsdämpfenden Gehäuseelemente (32) gelagert ist.

7. Analysevorrichtung (10) nach einem der vorhergehenden Ansprüche, wobei die Analysevorrichtung (10) eine Schwingungsmessvorrichtung (34) aufweist, die dazu ausgebildet ist, einen Einfluss von äußeren Schwingungen als Schwingungssignal zu bestimmen und ein Schwingungswarnsignal bereitzustellen, falls das Schwingungssignal über oder unter einem vorgegebenen Schwingungsschwellenwert ist.

8. Analysevorrichtung (10) nach einem der vorhergehenden Ansprüche, wobei die Analysevorrichtung (10) eine Spektrumanalysatorvorrichtung (36) aufweist, die dazu ausgebildet ist, ein elektromagnetisches Störsignal zu bestimmen und ein Störwarnsignal bereitzustellen, falls das elektromagnetische Störsignal über einen vorgegebenen Störsignalschwellenwert ist.

9. Verfahren zum Bestimmen eines Schwingungsmusters einer Substanz mit einer Analysevorrichtung (10) nach einem der Ansprüche 1 bis 8, umfassend die Schritte:
- Anordnen (S12) der Substanz in einen der beiden Probenbehälter (14);
- Verschließen (S14) der Probenbehälter (14) und/oder der Zentraleinheit (12);
- Messen (S18) des Schwingungsmusters an dem Differenzverstärker (20) für eine vorgegebene Messdauer.

10. Verfahren nach Anspruch 9, wobei vor dem Anordnen der Substanz in einen der Probenbehälter (14) ein Signal des Differenzverstärkers (20) kompensiert (S10) wird.

11. Verfahren nach einem der Ansprüche 9 oder 10, wobei ein Schutzbehältnis, insbesondere ein Glasröhrchen, mit der Substanz in dem Probenbehälter (14) angeordnet wird, und ein weiteres identisches Schutzbehältnis ohne der Substanz in dem anderen Probenbehälter (14) angeordnet wird (S12).

12. Verfahren nach einem der Ansprüche 9 bis 11, wobei vor dem Messen des Schwingungsmusters die Zentraleinheit (12) in einem schalldämmenden Gehäuse (30) angeordnet wird (S16).

## Claims

1. An analysis device (10) for determining an oscillation pattern of a substance, comprising
- a central unit (12) with two identical sample containers (14), two microphone apparatuses (16), a differential amplifier (20), opaque closing lids (42), connecting lines (18) and oscillation-damping elements (28);
- wherein the sample containers (14) are closable by the respective opaque closing lids (42), wherein the interior of the sample containers (14) is shielded by walls of the sample containers and the closing lids (42) from all sides from optical radiation after closing;
- wherein one of the microphone apparatuses (16) is respectively arranged in the respective sample containers (14);
- wherein the microphone apparatuses (16) are electronically coupled to the differential amplifier (20) via the respective connecting lines (18), wherein the connecting lines (18) are each identically constructed;
- wherein the differential amplifier (20) is formed to compensate for in-phase parasitic oscillations from both sample containers (14) and to determine the oscillation pattern of the substance upon introduction of the substance into only one of the two sample containers (14); and
- wherein the analysis device (10) does not comprise an excitation source, by which the sample-containers (14) and/or the substance are excitable in one of the two sample-containers (14);
- wherein the two sample containers (14) are mounted by the oscillation-damping elements (28), which are formed to absorb and reduce oscillations,
- wherein the central unit (12) is formed as a Faraday cage; and
- wherein the analysis device (10) comprises a sound-absorbing housing (30), wherein the central unit (12) is arranged in the sound-absorbing housing (30).

2. The analysis device (10) according to claim 1, wherein the analysis device (10) comprises a computer device (22) with a storage unit (24), wherein the computer device (22) is formed to digitally store the oscillation pattern of the substance in the storage unit (24).

3. The analysis device (10) according to any one of the preceding claims, wherein the microphone apparatuses (16) comprise a capacitor microphone.

4. The analysis device (10) according to any one of the preceding claims, wherein the microphone apparatuses (16) comprise an acoustic lens (40).

5. The analysis device (10) according to any one of the preceding claims, wherein the central unit (12) of the analysis device (10) comprises a shielding chamber (26), wherein the differential amplifier (20) is electromagnetically shielded from the sample containers (14) and the microphone apparatuses (16) by the shielding chamber (26), wherein the shielding chamber (26) is formed as a Faraday cage.

6. The analysis device (10) according to any one of the preceding claims, wherein the analysis device (10) comprises oscillation-damping housing elements (32), wherein the sound-absorbing housing (30) is mounted by the oscillation-damping housing elements (32).

7. The analysis device (10) according to any one of the preceding claims, wherein the analysis device (10) comprises an oscillation measurement device (34), which is formed to determine an influence of external oscillations as an oscillation signal and to provide an oscillation warning signal if the oscillation signal is above or below a preset oscillation threshold value.

8. The analysis device (10) according to any one of the preceding claims, wherein the analysis device (10) comprises a spectrum analyzer device (36), which is formed to determine an electromagnetic interfering signal and to provide an interference warning signal if the electromagnetic interfering signal is above a preset interfering signal threshold value.

9. A method for determining an oscillation pattern of a substance with an analysis device (10) according to any one of claims 1 to 8, comprising the steps:
- arranging (S12) the substance in one of the two sample containers (14);
- closing (S14) the sample containers (14) and/or the central unit (12);
- measuring (S18) the oscillation pattern at the differential amplifier (20) for a preset measurement duration.

10. The method according to claim 9, wherein before arranging the substance in one of the sample containers (14), a signal of the differential amplifier (20) is compensated for (S10).

11. The method according to any one of claims 9 or 10, wherein a protective vessel, in particular a glass tube, with the substance is arranged in the sample container (14), and a further identical protective vessel without the substance is arranged in the other sample container (14) (S12).

12. The method according to any one of claims 9 to 11, wherein before measuring the oscillation pattern, the central unit (12) is arranged in a sound-absorbing housing (30) (S16).

## Revendications

1. Dispositif d'analyse (10) destiné à déterminer un modèle d'oscillation d'une substance, comprenant :
- une unité centrale (12) avec deux récipients d'échantillon (14) identiques, deux appareils à microphone (16), un amplificateur différentiel (20), des couvercles de fermeture opaques (42), des lignes de raccordement (18) et des éléments amortisseurs d'oscillations (28) ;
- les récipients d'échantillon (14) pouvant être fermés par les couvercles de fermeture opaques (42) respectifs, l'intérieur des récipients d'échantillon (14) étant protégé, après fermeture, de tous les côtés contre le rayonnement optique par des parois des récipients d'échantillon et les couvercles de fermeture (42) ;
- l'un des appareils à microphone (16) étant respectivement agencé dans les récipients d'échantillon (14) respectifs ;
- les appareils à microphone (16) avec l'amplificateur différentiel (20) étant électroniquement couplés via les lignes de raccordement (18) respectives, les lignes de raccordement (18) étant respectivement construites de manière identique ;
- l'amplificateur différentiel (20) étant formé pour compenser des oscillations parasites en phase provenant des deux récipients d'échantillon (14) et pour déterminer le modèle d'oscillation de la substance lorsque la substance n'est introduite que dans un seul des deux récipients d'échantillon (14) ; et
- le dispositif d'analyse (10) ne comportant aucune source d'excitation avec laquelle les récipients d'échantillon (14) et/ou la substance peuvent être excités dans l'un des deux récipients d'échantillon (14) ;
- les deux récipients d'échantillon (14) étant montés sur les éléments amortisseurs d'oscillations (28) qui sont formés pour absorber et réduire des oscillations ;
- l'unité centrale (12) étant réalisée sous la forme d'une cage de Faraday ; et
- le dispositif d'analyse (10) comportant un coffret absorbeur de son (30), l'unité centrale (12) étant agencée dans le coffret absorbeur de son (30).

2. Dispositif d'analyse (10) selon la revendication 1, dans lequel le dispositif d'analyse (10) comporte un dispositif informatique (22) avec une unité de stockage (24), le dispositif informatique (22) étant conçu pour stocker numériquement le modèle d'oscillation de la substance dans l'unité de stockage (24).

3. Dispositif d'analyse (10) selon l'une des revendications précédentes, dans lequel les appareils à microphone (16) comportent un microphone à condensateur.

4. Dispositif d'analyse (10) selon l'une des revendications précédentes, dans lequel les appareils à microphone (16) comportent une lentille acoustique (40).

5. Dispositif d'analyse (10) selon l'une des revendications précédentes, dans lequel l'unité centrale (12) du dispositif d'analyse (10) comporte une chambre de blindage (26), l'amplificateur différentiel (20) étant protégé électromagnétiquement des récipients d'échantillon (14) et des appareils à microphone (16) par la chambre de blindage (26), la chambre de blindage (26) étant réalisée sous la forme d'une cage de Faraday.

6. Dispositif d'analyse (10) selon l'une des revendications précédentes, dans lequel le dispositif d'analyse (10) comporte des éléments de coffret amortisseurs d'oscillations (32), le coffret absorbeur de son (30) étant supporté par les éléments de coffret amortisseurs d'oscillations (32).

7. Dispositif d'analyse (10) selon l'une des revendications précédentes, dans lequel le dispositif d'analyse (10) comporte un dispositif de mesure d'oscillations (34) qui est formé pour déterminer une influence d'oscillations externes sous forme de signal d'oscillation et pour fournir un signal d'avertissement d'oscillation si le signal d'oscillation est au-dessus ou en dessous d'une valeur de seuil d'oscillation prédéterminée.

8. Dispositif d'analyse (10) selon l'une des revendications précédentes, dans lequel le dispositif d'analyse (10) comporte un dispositif d'analyse spectrale (36) qui est formé pour déterminer un signal d'interférence électromagnétique et pour fournir un signal d'avertissement d'interférence si le signal d'interférence électromagnétique est au-dessus d'une valeur de seuil de signal d'interférence prédéterminée.

9. Procédé pour déterminer un modèle d'oscillation d'une substance avec un dispositif d'analyse (10) selon l'une des revendications 1 à 8, comprenant les étapes consistant à :
- placer (S12) la substance dans l'un des deux récipients d'échantillon (14) ;
- fermer (S14) les récipients d'échantillon (14) et/ou l'unité centrale (12) ;
- mesurer (S18) le modèle d'oscillation sur l'amplificateur différentiel (20) pendant une durée de mesure prédéfinie.

10. Procédé selon la revendication 9, dans lequel un signal de l'amplificateur différentiel (20) est compensé (S10) avant de placer la substance dans l'un des récipients d'échantillon (14).

11. Procédé selon l'une des revendications 9 ou 10, dans lequel un contenant de protection, en particulier un tube en verre, avec la substance est disposé dans le récipient d'échantillon (14), et un autre contenant de protection identique sans substance est placé (S12) dans l'autre récipient d'échantillon (14).

12. Procédé selon l'une des revendications 9 à 11, dans lequel l'unité centrale (12) est placée (S16) dans un coffret absorbeur de son (30) avant la mesure du modèle d'oscillation.
